# EUROPÄISCHE PATENTSCHRIFT

(11) **EP 2 539 160 B1**
(45) Veröffentlichungstag und Bekanntmachung des Hinweises auf die Patenterteilung: **12.09.2018**
(21) Anmeldenummer: 10801146.1
(22) Anmeldetag: 24.12.2010
(51) Int. Cl.: B44B 5/00, B60R 13/10

(54) **VERFAHREN UND VORRICHTUNG ZUM PRÄGEN VON KENNZEICHEN, INSBESONDERE KRAFTFAHRZEUGKENNZEICHEN**
METHOD AND DEVICE FOR STAMPING MARKINGS, IN PARTICULAR MOTOR VEHICLE MARKINGS
PROCÉDÉ ET DISPOSITIF POUR L'ESTAMPAGE D'UNE IDENTIFICATION, EN PARTICULIER D'UNE PLAQUE MINÉRALOGIQUE D'UN VÉHICULE AUTOMOBILE

(30) Priorität: 10.06.2010 DE 102010023254; 26.02.2010 DE 102010009555
(43) Veröffentlichungstag der Anmeldung: 02.01.2013
(73) Patentinhaber: Tönnjes ISI Patent Holding GmbH, 27751 Delmenhorst (DE); Handelsonderneming Kirpestein B.V., 4191 PG Geldermalsen (NL)
(72) Erfinder: KIRPESTEIN, Koert, J., W., NL-4191 PG Geldermalsen (NL)
(74) Vertreter: Möller, Friedrich
(86) Internationale Anmeldenummer: PCT/EP2010/007943
(87) Internationale Veröffentlichungsnummer: WO 2011/103910

(56) Entgegenhaltungen:
- DE-A1- 10 119 347
- DE-A1- 19 808 801
- DE-A1- 19 836 801
- DE-A1- 19 930 272
- DE-A1-102008 025 104
- DE-C1- 19 612 831
- US-A1- 2009 223 600

## Beschreibung

Die Erfindung betrifft ein Verfahren zum Herstellen von insbesondere Kraftfahrzeugkennzeichen gemäß dem Oberbegriff des Anspruchs 1. Des Weiteren betrifft die Erfindung eine Vorrichtung zum Herstellen von insbesondere Kraftfahrzeugkennzeichen gemäß dem Oberbegriff des Anspruchs 7.

Kennzeichen, und zwar insbesondere Kraftfahrzeugkennzeichen, verfügen über eine individuelle Ziffernfolge aus Buchstaben und/oder Zahlen. Die Anzahl und Reihenfolge der Buchstaben und/oder Zahlen ist jeweils länderspezifisch festgelegt und somit unterschiedlich. Üblicherweise bestehen die Kraftfahrzeugkennzeichen aus sowohl Ziffern als auch Zahlen in einer bestimmten Reihenfolge. Es gibt auch Staaten, in denen die Kraftfahrzeugkennzeichen nur Ziffern oder Zahlen aufweisen. Es gibt andere Staaten, die nicht alle Buchstaben des Alphabets, sondern nur eine Auswahl bestimmter Buchstaben, für Kraftfahrzeugkennzeichen zulassen. Gleiches kann auch für Zahlen gelten.

Die für das individuelle Kennzeichen vorgesehene Aufeinanderfolge der Buchstaben und/oder Zahlen (nachfolgend stets nur kurz "Ziffernfolge" genannt) wird bei Kennzeichen der hier angesprochenen Art in einen Rohling eingeprägt. Beim Rohling handelt es sich in der Regel um einen noch flachen Zuschnitt aus dünnem Blech, beispielsweise Aluminium, einer dünnwandigen Kunststoffplatte oder ähnlichem. Der Rohling kann gegebenenfalls auch schon mit immer wiederkehrenden Prägungen versehen sein, beispielsweise einer umlaufenden Randprägung oder auch bestimmten Buchstaben- und/oder Zahlenkombinationen, die bei einer größeren Anzahl von Kennzeichen stets die gleichen sind. Der individuelle Ziffernsatz wird in den noch ungeprägten oder vorgeprägten Rohlingen durch Prägewerkzeuge eingeprägt. Jedes Prägewerkzeug besteht aus einem Oberteil, in dem die jeweilige Ziffer vertieft eingearbeitet ist und einem Unterteil, auf dem die gleiche Ziffer erhaben ist. Das Ober- und Unterteil des Prägewerkzeugs sind an einem Querrand scharnierartig miteinander verbunden. Dadurch entsteht ein maulartiges, an einem Querrand offenes Prägewerkzeug, in das der Rohling quer zu seiner Längsrichtung einschiebbar ist.

In einem Magazin ist ein entsprechender Vorrat der benötigten Ziffern (Zahlen und/oder Buchstaben) gelagert. Aus dem Magazin werden die zur individuellen Prägung des jeweiligen Kennzeichens benötigten Ziffern entnommen und in einer Werkzeugaufnahme zum gewünschten Ziffernsatz angeordnet. Dieses ist sehr zeitaufwendig.

Aus der DE 101 19 347 A1 ist eine Einrichtung zur Herstellung von geprägten Kennzeichen aus Platinen bekannt, bei der in einem Magazin ein entsprechender Vorrat der benötigten Prägewerkzeuge (Zahlen und/oder Buchstaben) gelagert ist. Aus dem Magazin werden die zur individuellen Prägung des jeweiligen Kennzeichens benötigten Prägewerkzeuge entnommen und in einer Werkzeugaufnahme zum gewünschten Ziffernsatz angeordnet. Hierzu und zum Zuführen der Platinen benötigt die bekannte Einrichtung verschiedene separate Förderer. Eine solche Einrichtung verfügt über einen aufwendigen Aufbau und benötigt viel Bauraum.

Aus der DE 198 36 801 A1 ist eine Presse zum Prägen von Kennzeichen für Kraftfahrzeuge bekannt, die die Ziffern in ein Blechband einprägt. Die benötigten Prägewerkzeuge werden aus Magazinen mittels Vertikalantrieben bereitgestellt und von zusätzlichen Horizontalantrieben seitlich auf den Blechstreifen geschoben. Diese Prägepresse ist durch die erforderlichen Vertikal- und Horizontalantriebe sehr aufwendig und platzintensiv. Außerdem muss hinter der bekannten Prägepresse eine Stanzvorrichtung vorhanden sein, die aus dem Blechstreifen nach dem Prägen desselben das Kennzeichen ausstanzt. Das muss nach dem Prägen des Kennzeichens positionsgenau geschehen.

Der Erfindung liegt die Aufgabe zugrunde, ein Verfahren und eine Vorrichtung zum Herstellen von geprägten Kennzeichen, insbesondere Kraftfahrzeugkennzeichen, zu schaffen, die einfach aufgebaut sind und automatisch arbeiten.

Ein Verfahren zur Lösung dieser Aufgabe weist die Maßnahmen des Anspruchs 1 auf. Demnach ist vorgesehen, dass von einer Handhabungseinrichtung die für das jeweils zu prägende Kennzeichen benötigten Prägewerkzeuge in der vorgesehenen Reihenfolge aus einem Magazin entnommen und auf bzw. in einer Werkzeugaufnahme positioniert werden. Das Heraussuchen der benötigten Prägewerkzeuge aus dem Magazin und die Anordnung der Prägewerkzeuge in der richtigen Reihenfolge auf bzw. im Werkzeugträger stellten bisher die aufwendigsten Tätigkeiten zum Herstellen von Kennzeichen dar. Diese Tätigkeiten erfolgen beim erfindungsgemäßen Verfahren automatisch durch die nach Art eines Roboters arbeitende Handhabungseinrichtung. Die Handhabungseinrichtung überführt nicht nur mechanisiert die benötigten Prägewerkzeuge vom Magazin zur Werkzeugaufnahme, durch eine entsprechende Steuerung kann sie die Prägewerkzeuge in der vorgesehenen Reihenfolge aus dem Magazin heraussuchen und auf oder in der Werkzeugaufnahme positionieren. Von der Handhabungseinrichtung wird auch jeweils ein Rohling aus einem Speicher mit einer Vielzahl vorzugsweise übereinanderliegender Rohlinge entnommen, sowie neben der Werkzeugaufnahme positioniert.

Eine vorteilhafte Ausgestaltung des Verfahrens sieht es vor, dass die Prägewerkzeuge auf bzw. in der Werkzeugaufnahme von der Handhabungseinrichtung in der gewünschten Relativlage zum Rohling positioniert und vorzugsweise aus ausgerichtet werden, insbesondere in einer rechnerisch ermittelten Relativlage zum Rohling. Dadurch ist gewährleistet, dass die bei Schrifttypen mit unterschiedlich breiten Ziffern und gleichen Zwischenräumen zwischen den benachbarten Ziffern unterschiedlich breiten Prägewerkzeuge von der Handhabungseinrichtung zentriert zum Rohling auf der Werkzeugaufnahme positionierbar sind oder die Prägewerkzeuge so über die Breite des Rohlings verteilt werden, dass eine gleichmäßige Aufteilung der Ziffern über die Breite des Rohlings erfolgt. Die Handhabungseinrichtung kann auch automatisch die Prägewerkzeuge in einer solchen rechnerisch ermittelten Relativlage auf oder in der Werkzeugaufnahme ablegen, dass zweizeilige Kennzeichen prägbar sind. Alternativ oder zur zusätzlich ist es auch denkbar den Rohling automatisch in gewünschter Weise zu den Prägewerkzeugen zu positionieren.

Das erfindungsgemäße Verfahren ist bevorzugt so ausgestaltet, dass der jeweilige Rohling so neben der Werkzeugaufnahme automatisch positioniert wird, dass er mindestens in seiner Längsrichtung relativ zu den individuell zusammengestellten Prägewerkzeugen in der Werkzeugaufnahme ausgerichtet ist. Dadurch werden von der roboterartigen Handhabungseinrichtung, insbesondere der automatischen Steuerung derselben, die gewünschten Stellen festgelegt, an denen die Ziffern von den Prägewerkzeugen in den Rohling eingeprägt werden sollen.

Eine bevorzugte Weiterbildung des Verfahrens sieht es vor, von einer Transporteinrichtung den jeweiligen Rohling in die der Werkzeugaufnahme zugeordneten Prägewerkzeuge einzuschieben. Nachdem von der Handhabungseinrichtung der Rohling in der Position, in der die Ziffern von den Prägewerkzeugen in den Rohling eingeprägt werden sollen, neben der Werkzeugaufnahme mit den Prägewerkzeugen positioniert worden ist, braucht die Transportvorrichtung den Rohling lediglich noch geradlinig in die offenen Mäuler der Prägewerkzeuge einzuschieben.

Ein alternatives Verfahren sieht es vor, den jeweiligen Rohling von der Handhabungseinrichtung an einer bestimmten Stelle neben der Werkzeugaufnahme abzulegen, wobei diese Stelle gegebenenfalls durch mindestens einen Anschlag festgelegt sein kann und das Ausrichten des Rohlings zu den Prägewerkzeugen in der Werkzeugaufnahme von der Transporteinrichtung oder einer anderen das Verschieben des Rohlings in Längsrichtung zulassenden Einrichtung vorzunehmen. Die Verstellbewegungen dieser Einrichtung können von der gleichen Steuerung vorgenommen werden, die auch zur Steuerung der Handhabungseinrichtung dient.

Nach einer vorteilhaften Ausgestaltung des Verfahrens ist es vorgesehen, dass von der Transporteinrichtung die Werkzeugaufnahme mit dem in die Prägewerkzeuge eingesetzten Rohling in eine Prägepresse hinein und nach dem Prägen wieder heraustransportiert wird. Dadurch entfallen auch manuelle Tätigkeiten für diesen Herstellungsschritt des Kennzeichens.

Eine Vorrichtung zur Lösung der eingangs genannten Aufgabe weist die Merkmale des Anspruchs 7 auf. Diese Vorrichtung zeichnet sich durch eine Handhabungseinrichtung aus, die dazu dient, die zum Prägen des jeweiligen individuellen Kennzeichens benötigten Prägewerkzeuge auf der Werkzeugaufnahme zu platzieren. Die Handhabungseinrichtung sucht sich automatisch nach und nach die benötigten Prägewerkzeuge aus dem Magazin und überführt sie in der richtigen Reihenfolge zur Werkzeugaufnahme, wo die Handhabungseinrichtung die Prägewerkzeuge zugleich an der vorgesehenen Position absetzt. Die Prägewerkzeuge werden von der Handhabungseinrichtung automatisch in der Reihenfolge der Ziffern auf dem herzustellenden Kennzeichen dem Magazin entnommen und an der richtigen Stelle auf oder in der Werkzeugaufnahme positioniert werden. Dazu ist die Handhabungseinrichtung als ein Roboter ausgebildet, der insbesondere auch als Zentriereinheit dient. Die Handhabungseinrichtung weist ein mehrachsig bewegbares Erfassungsmittel auf. Beim Erfassungsmittel kann es sich um Greifer, Sauger oder auch Magneten handeln, die geeignet sind, mindestens jeweils ein ausgewähltes Prägewerkzeug und/oder auch einen Rohling zur Herstellung des Kennzeichens zu ergreifen und festzuhalten, um das Prägewerkzeug bzw. den Rohling an die gewünschte Stelle zu transportieren und dort abzusetzen. Dadurch, dass das Erfassungsmittel mehrachsig bewegbar ist, kann es das jeweilige Prägewerkzeug bzw. den Rohling räumlich umorientieren, wodurch das Magazin für die Prägewerkzeuge, der Speicher für die Rohlinge und die Werkzeugaufnahme sich nicht nur an verschiedenen Stellen der Vorrichtung befinden können, sondern auch auf verschiedenen Höhen, die sich gegebenenfalls verändern können, wie das beispielsweise bei den im Speicher übereinandergestapelten Rohlingen der Fall ist.

Die Handhabungseinrichtung ist nach einer weiteren vorteilhaften Ausgestaltung der Erfindung mit mehreren, vorzugsweise drei, jeweils über eine Rotationsachse bewegbaren Armen versehen, die die Zentriereinheiten darstellen. Die Arme bilden bevorzugt Parallelogramme. Die so ausgebildete Handhabungseinrichtung, die auch als Delta-Roboter bezeichnet wird, hält das Erfassungsmittel bei allen denkbaren Positionen in einem räumlichen, dreidimensionalen Bereich stets in gleicher Ausrichtung. Das Erfassungsmittel kann dadurch in der gleichen Richtung auf ein Prägewerkzeug oder einen Rohling zugreifen und das Prägewerkzeug bzw. den Rohling ohne ein Verkippen oder Verschwenken an einer anderen Stelle absetzen. Denkbar ist es aber auch, das Erfassungsmittel so an der Handhabungseinrichtung anzuordnen, dass es unter Beibehaltung der Richtung gezielt andere Bewegungen, insbesondere Drehbewegungen, ausüben kann, beispielsweise um den Rohling und/oder das Prägewerkzeug von der Position im Speicher bzw. im Magazin in eine andere Position zu verdrehen, die das Prägemittel bzw. der Rohling in der Werkzeugaufnahme bzw. neben derselben einnehmen soll.

Eine Weiterbildung der Vorrichtung sieht es vor, neben bzw. vor der jeweiligen Werkzeugaufnahme eine Rohlingaufnahme für einen Rohling vorzusehen. Die Rohlingaufnahme ist der Handhabungseinrichtung derart zugeordnet, dass jeweils ein Rohling von der Handhabungseinrichtung auf der Rohlingaufnahme ablegbar ist. Somit dient die Handhabungseinrichtung nicht nur zur Ablage der Prägewerkzeuge auf der Werkzeugaufnahme, sondern auch zur Ablage eines Rohlings des zu prägenden Kennzeichens vor bzw. neben der Werkzeugaufnahme. Die Handhabungseinrichtung weist somit mehrere Funktionen auf.

Die Erfindung sieht es des Weiteren vor, der jeweiligen Rohlingaufnahme mindestens einen Anschlag zuzuordnen, der zur Positionierung und/oder zur Ausrichtung des jeweiligen Rohlings auf der Rohlingaufnahme dient. Insbesondere wird dadurch der Rohling in einer definierten Relativposition zu den Prägewerkzeugen auf oder in der Werkzeugaufnahme auf der tischartigen Rohlingaufnahme abgelegt. Der Rohling wird dadurch beim Auflegen auf die Rohlingaufnahme gleichzeitig mit der gewünschten oder erforderlichen Relativlage zu den Prägewerkzeugen ausgerichtet. Alternativ oder zusätzlich ist es auch denkbar, den Prägewerkzeugen mindestens einen Anschlag zuzuordnen.

Eine weitere vorteilhafte Ausbildung der Vorrichtung sieht es vor, dass die jeweilige Rohlingaufnahme zur Verschiebung des darauf liegenden Rohlings in Längsrichtung, also quer zu den Prägewerkzeugen auf der Werkzeugaufnahme, ausgebildet ist. Es kann hierdurch der Rohling relativ zu den Prägewerkzeugen zentriert werden in Abhängigkeit von der Lage und der Größe der jeweils in den Rohling einzuprägenden Ziffernfolge. Diese zur Zentrierung dienende Verschiebung des Rohlings erfolgt von der Rohlingaufnahme gezielt gesteuert, und zwar vorzugsweise mit Signalen aus der Steuerung der Handhabungseinrichtung und/oder Transporteinrichtung.

Ein bevorzugtes Ausführungsbeispiel der Erfindung wird nachfolgend anhand der Zeichnung näher erläutert. In dieser zeigen:
- Fig. 1: eine perspektivische Ansicht einer Vorrichtung schräg von vorn,
- Fig. 2: eine vergrößerte Einzelheit der Vorrichtung der Fig. 1,
- Fig. 3: eine perspektivische Ansicht der Vorrichtung von schräg vom, und zwar unter einem anderen Blickwinkel,
- Fig. 4: eine perspektivische Ansicht der Vorrichtung schräg von hinten, und

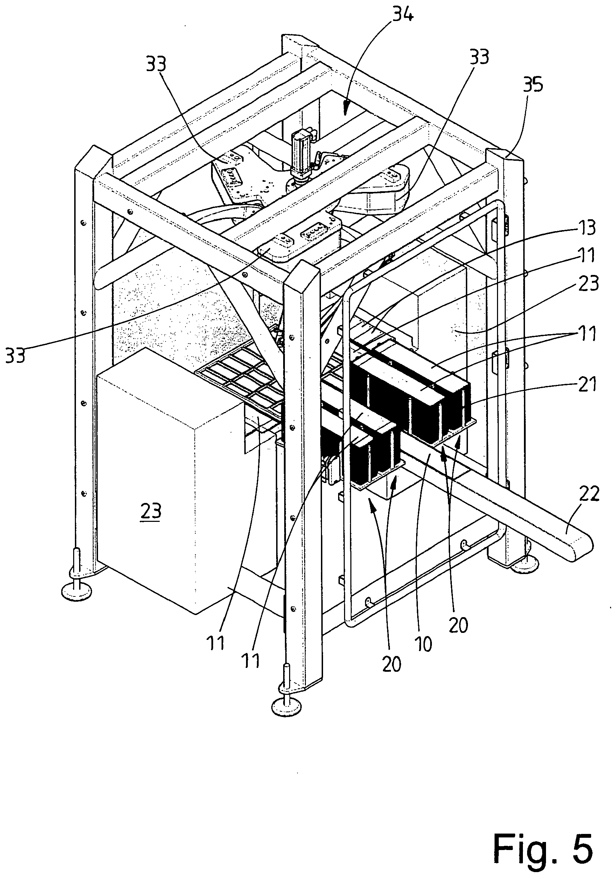

- Fig. 5: eine Ansicht der Vorrichtung von hinten unter einem anderen Blickwinkel, und zwar von schräg oben.

Die gezeigte Vorrichtung dient dazu, Kraftfahrzeugkennzeichen 10 herzustellen, nämlich eine individuelle Ziffernfolge und gegebenenfalls auch Zeichen in einen Rohling 11 für das Kraftfahrzeugkennzeichen 10 einzuprägen. Bei der hier gezeigten Vorrichtung werden nur die individuelle Ziffernfolge und gegebenenfalls Zeichen in den Rohlingen 11 eingeprägt. Der Rohling 11 kann aber schon vorgeprägt sein, beispielsweise mit einer umlaufenden Randprägung und/oder wiederkehrenden Buchstaben, Ziffern und/oder Zeichen. Der Rohling 11 besteht aus Stahl- oder Aluminiumblech oder gegebenenfalls auch einer Kunststoffplatte oder -folie. Während der Rohling 11 aus Stahl oder Aluminium kalt geprägt wird, erfolgt das Prägen eines Rohlings 11 aus Kunststoff im erwärmten bzw. aufgeheizten Zustand.

Die gezeigte Vorrichtung verfügt über ein Magazin 12, das alle benötigten Prägewerkzeuge 13 enthält. Das Magazin 12 ist als ebenflächiges Tablett mit neben- und übereinanderliegenden Aufnahmen 14 für jeweils ein einzelnes Prägewerkzeug 13 oder auch mehrere übereinanderliegende Prägewerkzeuge 13 ausgebildet. Das Magazin 12 verfügt über eine Anzahl von Aufnahmen 14, die der Anzahl verschiedener Prägewerkzeuge 13 entspricht. Das in den Figuren gezeigte Magazin 12 verfügt nur über 27 Aufnahmen 14. In manchen Staaten werden nicht alle Buchstaben des Alphabets für Kraftfahrzeugkennzeichen 10 verwendet, so dass die gezeigte Anzahl von Aufnahmen 14 in solchen Staaten ausreichend sein kann. Erforderlichenfalls kann das Magazin 12 eine größere Anzahl von Aufnahmen 14 aufweisen, und zwar gegebenenfalls eine solche Anzahl von Aufnahmen 14, die allen Buchstaben des Alphabets, allen Zahlen und den verwendeten Zeichen entspricht. In einer Aufnahme 14 können sich mehrere übereinandergestapelte Prägewerkzeuge 13 befinden. Dabei handelt es sich vorzugsweise um gleiche Prägewerkzeuge, also solche der gleichen Ziffer oder des gleichen Zeichens. Es ist aber auch denkbar, verschiedene Prägewerkzeuge 13 in einer Aufnahme 14 übereinanderzustapeln. In einem solchen Fall ist die Positionierung jedes einzelnen Prägewerkzeugs 13 im Magazin 12 in einem Speicher einer Steuerung hinterlegt. Beim in den Figuren gezeigten Magazin 12 sind die Aufnahmen 14 unterschiedlich groß. Sie entsprechen der Größe der Prägewerkzeuge 13, die insbesondere bei Buchstaben variieren können. Beispielsweise sind die Prägewerkzeuge 13 für ein "I" schmaler als für ein "W". Bei gleich breiten Prägewerkzeugen 13 können alle Aufnahmen 14 des Magazins 12 gleich groß sein.

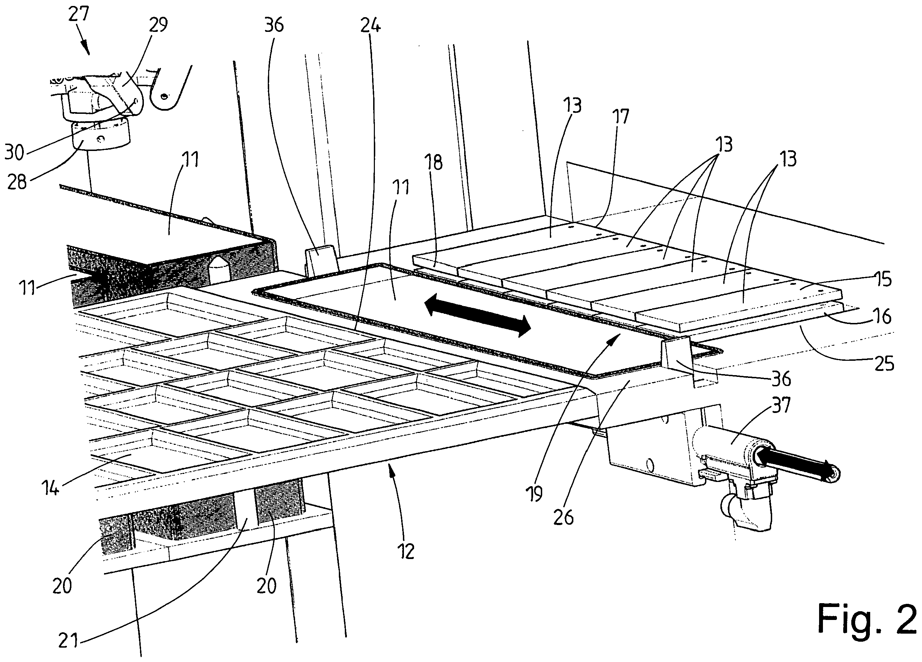

Die nur symbolisch in der Fig. 2 dargestellten Prägewerkzeuge 13 sind maulartig ausgebildet. Dazu besteht jedes im Prinzip gleiche Prägewerkzeug 13 aus einem Oberteil, in dem jeweils eine Ziffer oder ein Zeichen vertieft eingearbeitet ist zur Prägung der Oberseite des Kraftfahrzeugkennzeichens 10, und einem Unterteil 16, in dem die zum Oberteil 15 korrespondierende Ziffer oder Zeichen zur Prägung der Unterseite des Kraftfahrzeugkennzeichens 10 erhaben vorsteht. Das Oberteil 15 und das Unterteil 16 jedes Prägewerkzeugs 13 sind an benachbarten Querrändem 17 scharnierartig miteinander verbunden. An den gegenüberliegenden Querrändem 18 besteht keine Verbindung zwischen dem Unterteil 16 und dem Oberteil 15, so dass an den Querrändern 18 des Oberteils 15 und des Unterteils 16 jedes Prägewerkzeugs 13 ein offenes Maul 19 vorhanden ist. Durch dieses ist der Rohling 11 quer zu seiner Längsachse in die Prägewerkzeuge 13 einschiebbar.

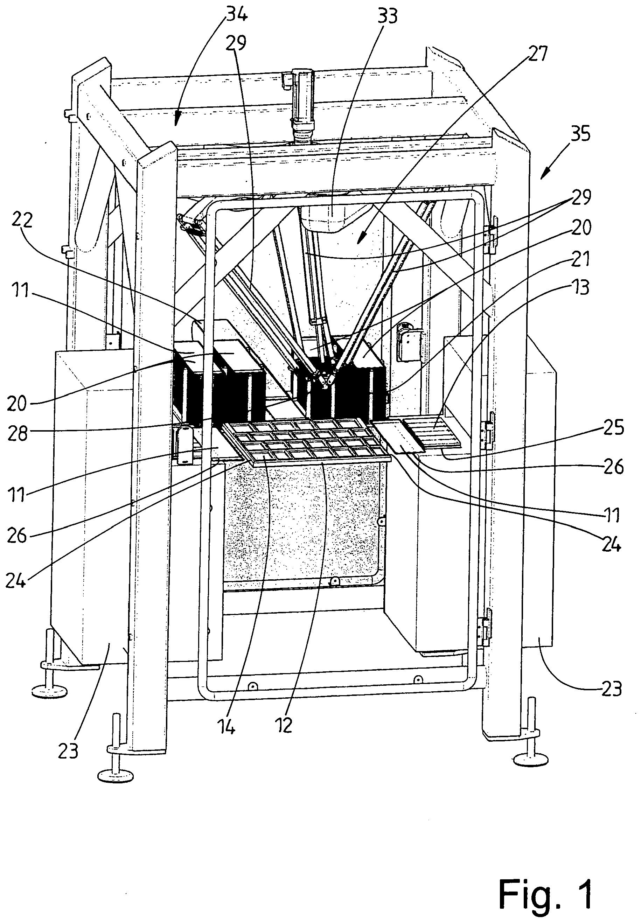

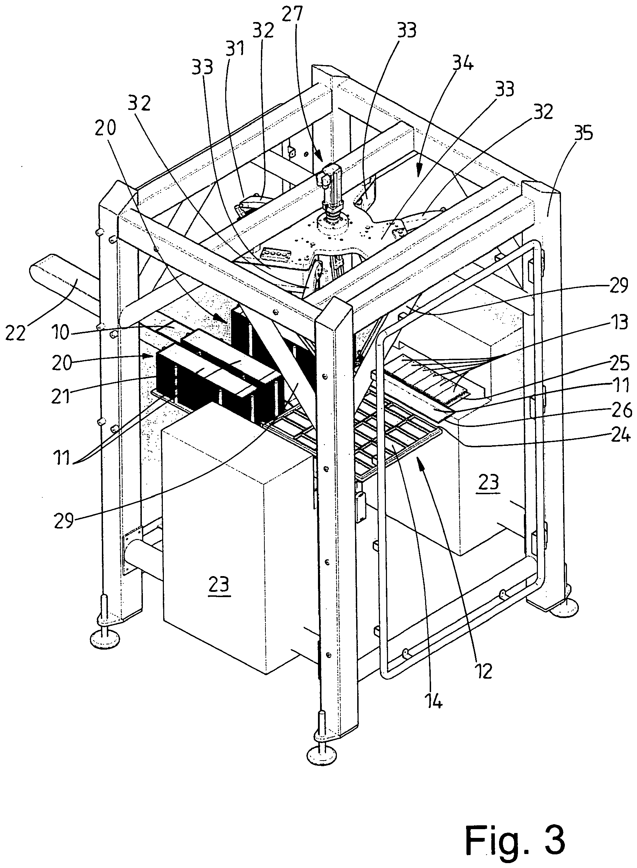

Bezogen auf die Fig. 1 bis 3 sind hinter dem Magazin 12 mehrere vorzugsweise gleich große Speicher 20 für einen Vorrat an Rohlingen 11 vorgesehen. Im gezeigten Ausführungsbeispiel sind auf beiden Seiten einer Mitte der Vorrichtung zwei nebeneinanderliegende Speicher 20 hinter dem Magazin 12 angeordnet. Jeder Speicher 20 ist so ausgebildet, dass in ihm mehrere übereinander gestapelte Rohlinge 11 Aufnahme finden. Durch aufrechte Haltestäbe 21 sind die Rohlinge 11 des jeweiligen Stapels seitlich gegen Verschieben im Speicher 20 geführt. Oben ist jeder Speicher 20 offen zur Entnahme des jeweils oben liegenden Rohlings 11 des Stapels aus dem jeweiligen Speicher 20. Die Vorrichtung kann auch eine größere oder kleinere Anzahl an Speichern 20 aufweisen als in den Figuren gezeigt.

Die beiden Speicher 20 auf jeder Seite der Vorrichtung sind voneinander so weit beabstandet, dass zwischen ihnen Platz für einen Abförderer 22 entsteht. Der horizontal verlaufende Abförderer 22 erstreckt sich mittig in Längsrichtung durch die Vorrichtung, und zwar ausgehend von der Hinterseite des Magazins 12.

Die gezeigte Vorrichtung verfügt über zwei vorzugsweise gleich ausgebildete Prägepressen 23. Hierauf ist die Erfindung aber nicht beschränkt. Die Vorrichtung kann mehr als zwei Prägepressen 23 aufweisen, aber auch nur eine einzige Prägepresse 23. Die Prägepressen 23 sind gegenüberliegenden Seiten der Vorrichtung zugeordnet, wobei das Magazin 12 sich etwa mittig zwischen den beiden Prägepressen 23 befindet. Die Prägepressen 23 sind spiegelverkehrt zueinander angeordnet, so dass sie ausgehend vom etwa mittig in der Vorrichtung angeordneten Magazin 12 über gegenüberliegende Querseiten 24 des Magazins 12 hinweg beschickbar sind.

Jeder Prägepresse 23 ist eine Werkzeugaufnahme 25 für zum Prägen des jeweiligen Kraftfahrzeugkennzeichens 10 benötigten Prägewerkzeuge 13 und eine tischartige Rohlingaufnahme 26 für jeweils einen Rohling 11 zugeordnet. Außen neben jeder Querseite 24 des Magazins 12 befindet sich jeweils eine Rohlingaufnahme 26 und daneben, also zwischen der jeweiligen Rohlingaufnahme 26 und einer Prägepresse 23, die Werkzeugaufnahme 25. Bei der hier gezeigten Vorrichtung befinden sich das Magazin 12, die Rohlingaufnahmen 26 und die seitlich daneben angeordneten Werkzeugaufnahmen 25 in etwa einer horizontalen Ebene zwischen den beiden gegenüberliegenden Prägepressen 23.

Die Vorrichtung verfügt weiterhin über eine Handhabungseinrichtung 27, die roboterartig ausgebildet ist. Im gezeigten Ausführungsbeispiel wird die Handhabungseinrichtung 27 als ein sogenannter Delta-Roboter gebildet. Dieser verfügt über ein räumlich bewegbares Erfassungsmittel 28. Das Erfassungsmittel 28 ist von der Handhabungseinrichtung 27 im dreidimensionalen Raum mindestens dreiachsig bewegbar. Das Erfassungsmittel 28 ist so ausgebildet, dass es sowohl Rohlinge 11 als auch Prägewerkzeuge 13 erfassen kann. Zu diesem Zweck kann das Erfassungsmittel 28 als ein Sauggreifer ausgebildet sein. Alternativ kann das Erfassungsmittel 28 auch von einem mechanischen Greifer oder einem Magneten gebildet sein. Vorzugsweise ist das Erfassungsmittel 28 um mindestens eine Mittelachse drehbar, und zwar insbesondere um eine senkrechte Mittelachse. Dadurch können die Rohlinge 11 und/oder Prägewerkzeuge gedreht werden, was bei der hier gezeigten Vorrichtung mit zwei um 180° zueinander versetzten Prägepressen 23 erforderlich ist.

Die gezeigte, als Delta-Roboter ausgebildete, Handhabungseinrichtung 27 verfügt über drei gleich ausgebildete Arme, bei denen es sich hier um Parallelogrammarme 29 handelt, die mit unteren Enden über Drehachsen 30 gelenkig am Erfassungsmittel 28 gelagert sind. Die drei als Zentriereinheiten ausgebildete Parallelogrammarme 29 sind gleichmäßig um das Erfassungsmittel 28 herum angeordnet, also jeweils um 120° zueinander versetzt.

Ein oberes Ende jedes Parallelogrammarms 29 ist um eine Drehachse 31 verdrehbar an einem freien Ende eines Schwenkarms 32 gelagert. Ein gegenüberliegendes, zur Mitte der Vorrichtung weisendes Ende des Schwenkarms 33 ist an einem Drehantrieb 33 befestigt. Die Drehachsen 30, 31 an gegenüberliegenden Enden aller Parallelogrammarme 29 verlaufen horizontal und parallel zueinander, wobei die Drehachsen 30 an den unteren Enden der Parallelogrammarme 29 tangential um jeweils eine gedachte Kreisbahn um das Erfassungsmittel 28 herum angeordnet sind. Die Drehachsen 31 an den oberen Enden der Parallelogrammarme 29 sind ebenfalls tangential um 120° zueinander versetzt auf einer Kreisbahn angeordnet, die aber größer ist als die Kreisbahn, auf der die unteren Drehachsen 30 liegen. Dadurch verfügt die als Delta-Roboter ausgebildete Handhabungseinrichtung 27 über eine klappschirmartige Konfiguration. Die drei Drehantriebe 33 für jeweils einen Parallelogrammarm 29 sind ortsfest unter einer Deckenebene 34 eines dreidimensionalen Gestells 35 der Vorrichtung angeordnet. Das Gestell 35 trägt auch das Magazin 12, die Aufnahme 14, die Speicher 20 und Abförderer 22. Auch die Prägepressen 23 können am Gestell 35 gelagert oder zumindest relativ zum Gestell 35 unbeweglich an demselben befestigt sein. Es ist aber auch denkbar, die Prägepressen 23 eigenständig an gegenüberliegenden Seiten des Gestells 35 anzuordnen.

Die Drehantriebe 33 sind gleichmäßig verteilt auf einer Kreisbahn um den Mittelpunkt der Deckenebene 34 herum angeordnet. Dadurch bewegen sich die Schwenkarme 32 der Drehantriebe 33 in vertikalen Ebenen, die um 120° versetzt radial zum Mittelpunkt der Deckenebene 34 verlaufen. Das Betätigen eines einzigen Drehantriebs 33 oder eine koordinierte Bewegung zweier oder sogar aller drei Drehantriebe 33 und eine daraus resultierende übergelagerte Bewegung der Schwenkarme 32 mit den Parallelogrammarmen 29 führt zu einer gewünschten Bewegung des Erfassungsmittels 28 zu einem bestimmten Punkt im (dreidimensionalen) Raum, wobei die Mittelachse des Erfassungsmittels 28 ihre vorzugsweise senkrechte Ausrichtung stets beibehält.

Gemäß der Darstellung in der Fig. 2 ist die Rohlingaufnahme 26 mit zwei gegenüberliegenden kurzen Querrändern des Rohlings 11 zugeordneten Anschlägen 36 versehen. Die Anschläge 36 weisen einen solchen Abstand auf, dass zwischen ihnen ein Rohling 11 in Längsrichtung im Wesentlichen unverschiebbar gehalten wird. Beide Anschläge 36 sind durch einen Linearantrieb 37, bei dem es sich beispielsweise um einen Pneumatikzylinder handeln kann, verschiebbar, und zwar sowohl gemeinsam mit unverändertem Abstand (Doppelpfeil in der Fig. 2) zur Zentrierung des Rohlings 11 vor der Werkzeugaufnahme 25 mit den darauf angeordneten Prägewerkzeugen 13 als auch einzeln zur Anpassung an unterschiedlich große Rohlinge 11 für Kraftfahrzeugkennzeichen 10 mit anderen Formaten.

Nachfolgend wird das erfindungsgemäße Verfahren unter Bezugnahme auf die zuvor beschriebene Vorrichtung erläutert:
In einer in den Figuren nicht gezeigten Steuerung der Handhabungseinrichtung 27, insbesondere ihrer Drehantriebe 33, des Linearantriebs 37 und des Abförderers 22 wird die jeweilige individuelle Ziffernfolge für das herzustellende Kraftfahrzeugkennzeichen 10 eingegeben. Üblicherweise werden zwei Kraftfahrzeugkennzeichen 10 mit gleicher Ziffernfolge benötigt. Diese können mit der zwei Prägepressen 23 aufweisenden gezeigten Vorrichtung gleichzeitig hergestellt werden. An diesem typischen Fall wird das Verfahren erläutert.

Anhand der im elektronischen Speicher eingegebenen Ziffernfolge werden von der Handhabungseinrichtung 27 die erforderlichen Prägewerkzeuge 13 dem Magazin 12 entnommen und beide Werkzeugaufnahmen 25 von der Handhabungseinrichtung 27 mit den Prägewerkzeugen 13 in der vorgesehenen Reihenfolge bestückt. Die Handhabungseinrichtung 27 entnimmt somit einzeln für jede Ziffer der Ziffernfolge zwei gleiche Prägewerkzeuge 13 und bestückt hiermit die Werkzeugaufnahmen 25 auf beiden Seiten neben dem Magazin 12. Im gezeigten Ausführungsbeispiel (worauf die Erfindung nicht beschränkt ist) enthält die Ziffernfolge sechs Ziffern, so dass auf jeder Werkzeugaufnahme 25 von der Handhabungseinrichtung 27 sechs nebeneinanderliegende Prägewerkzeuge 13 platziert werden, wobei die Mäuler 19 der Prägewerkzeuge 13 auf den beiden gegenüberliegenden Werkzeugaufnahmen 25 zueinander weisen. Dazu werden die Prägewerkzeuge 13 auf der einen Werkzeugaufnahme 25 spiegelverkehrt zu den Prägewerkzeugen 13 auf der anderen Werkzeugaufnahme 25 von der Handhabungseinrichtung 27 platziert durch Drehen des Erfassungsmittels 28 um 180° um eine vertikale mittige Drehachse.

Die Handhabungseinrichtung 27 kann die Prägewerkzeuge 13 auf beiden Werkzeugaufnahmen 25 so positionieren, dass sie derart zu den Rohlingen 11 zentriert sind, dass die Prägewerkzeuge 13 die Ziffern an der gewünschten Stelle in den jeweiligen Rohling 11 einprägen. Es ist auch denkbar, dass die Handhabungseinrichtung 27 die Prägewerkzeuge 13 auf den Werkzeugaufnahmen 25 zentriert bzw. mit von der Steuerung vorgegebenen Abständen positioniert. Diese Abstände werden dann von der Steuerung so berechnet, dass je nach Anzahl der Ziffern einer Ziffernfolge eine gleichmäßige Verteilung der Ziffern auf den zum Prägen zur Verfügung stehenden Bereich jedes Rohlings 11 erfolgt, so dass die Ziffern mit vorzugsweise gleichen Abständen in die Kraftfahrzeugkennzeichen einprägbar sind.

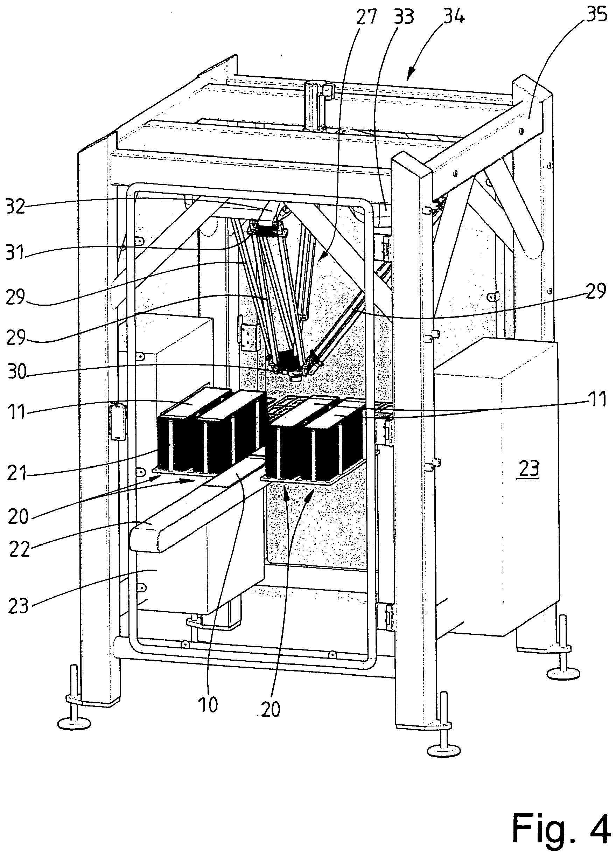

Die Handhabungseinrichtung 27 platziert außerdem die Rohlinge 11 auf den Rohlingaufnahmen 26 auf beiden Seiten des Magazins 12. Dieses erfolgt wiederum spiegelbildlich, wozu gegebenenfalls der Rohling 11 für eine Rohlingaufnahme 26 in einer horizontalen Ebene gedreht wird. Im gezeigten Ausführungsbeispiel ist ein solches Drehen der Rohlinge 11 nicht erforderlich, weil die Rohlinge 11 in den beiden Speichern 20 auf einer Seite des Abförderers 22 anders herum, nämlich um 180° in einer horizontalen Ebene gedreht, abgestapelt sind als in den Speichern 22 auf der anderen Seite des Abförderers 22 (Fig. 1 und 4).

Die Handhabungseinrichtung 27 legt die Rohlinge 11 zwischen den beiden Anschlägen 36 jeder Rohlingaufnahme 26 ab, so dass die Rohlinge 11 in Längsrichtung gesehen in einer definierten Relativposition zu den Prägewerkzeugen 13 in den Werkzeugaufnahmen 25 auf den Rohlingaufnahmen 26 von der jeweiligen Handhabungseinrichtung 27 positioniert werden. Vom Linearantrieb 37 kann der Abstand der Anschläge 36 verändert werden, um diese an unterschiedlich große Rohlinge 11 für andersformatige Kraftfahrzeugkennzeichen 10 anzupassen. Der Linearantrieb 37 kann auch dazu dienen, den jeweiligen Rohling 11 gegenüber den Prägewerkzeugen 13 auf oder in jeder Rohlingaufnahme 26 in Längsrichtung zu verschieben und dadurch gegenüber den Prägewerkzeugen 13 zu zentrieren. In diesem Falle kann sich eine Zentrierung der Rohlinge 11 auf oder in den Rohlingaufnahmen 26 durch die Handhabungseinrichtung 27 erübrigen.

Nachdem alle Prägewerkzeuge 13 auf den Werkzeugaufnahmen 25 und die Rohlinge 11 auf den Rohlingaufnahmen 26 von der Handhabungseinrichtung 27 platziert worden sind und eine Ausrichtung der Rohlinge 11 zu den Prägewerkzeugen 13 durch die Handhabungseinrichtung 27 und/oder die Linearantriebe 37 erfolgt ist, werden von nicht gezeigten Linearantriebe die Rohlinge 11 von den Rohlingaufnahmen 26 quer zur Längsrichtung der Rohlinge 11 durch die offenen Mäuler 19 in die Prägewerkzeuge 13 geschoben. Es werden dann von den Prägewerkzeugen 13 die Ziffern der Ziffernfolge von jeder Prägepresse 23 in die Rohlinge 11 eingeprägt und dadurch die individuellen Kraftfahrzeugkennzeichen 10 hergestellt. Je nach Ausbildung der Prägepressen 23 kann es vorgesehen sein, dass die Linearantriebe die Werkzeugaufnahmen 25 mit den Prägewerkzeugen 13 und die darin eingesetzten Rohlinge 11 in die jeweilige Prägepresse 23 hineinschieben.

Nach dem Prägen der Kraftfahrzeugkennzeichen 10 werden von den gleichen Linearantrieben die Werkzeugaufnahmen 25 mit den Prägewerkzeugen 13 und den geprägten Kraftfahrzeugkennzeichen 10 aus den Prägepressen 23 herausgenommen und die fertigen Kraftfahrzeugkennzeichen 10 aus den Prägewerkzeugen 13 herausgezogen auf die Rohlingaufnahmen 26. Von der Handhabungseinrichtung 27 werden die fertig geprägten Kraftfahrzeugkennzeichen 10 dann nach und nach von der Rohlingaufnahme 26 abgenommen und auf den Abförderer 22 aufgelegt, der die fertigen Kennzeichen aus der Vorrichtung heraustransportiert. Außerdem entnimmt die Handhabungseinrichtung 27 die zum Prägen der Kraftfahrzeugkennzeichen 10 benutzten Prägewerkzeuge 13 aus den Werkzeugaufnahmen 25 und legt diese nach und nach entweder in einer vorgesehenen Reihenfolge oder in einer beliebigen in der Steuerung abgespeicherten Reihenfolge im Magazin 12 ab. Gegebenenfalls kann es vorgesehen sein, dass die Handhabungseinrichtung 27 nur solche Prägewerkzeuge 13 den Werkzeugaufnahmen 25 entnimmt, die für die als nächstes herzustellenden Kraftfahrzeugkennzeichen 10 mit einer nur teilweise anderen Ziffernfolge nicht benötigt werden. Dann können die Prägewerkzeuge 13 für gleiche Ziffern der nächsten Kraftfahrzeugkennzeichen 10 auf den Werkzeugaufnahmen 25 verbleiben und gegebenenfalls von der Handhabungseinrichtung 27 umgesetzt und/ oder in andere Positionen auf der Werkzeugaufnahme 25 verschoben werden.

Die erfindungsgemäße Vorrichtung und das erfindungsgemäße Verfahren eignen sich nicht nur zur vorstehend beschriebenen Herstellung von Kraftfahrzeugkennzeichen 10, sondern auch zur Herstellung anderer Kennzeichen mit einer individuellen Ziffern- und/ oder Zeichenfolge oder nur einem individuellen Zeichen oder nur eine Ziffer.

### Bezugszeichenliste

- 10: Kraftfahrzeugkennzeichen
- 11: Rohling
- 12: Magazin
- 13: Prägewerkzeug
- 14: Aufnahme
- 15: Oberteil
- 16: Unterteil
- 17: Querrand
- 18: Querrand
- 19: Maul
- 20: Speicher
- 21: Haltestab
- 22: Abförderer
- 23: Prägepresse
- 24: Querseite
- 25: Werkzeugaufnahme
- 26: Rohlingaufnahme
- 27: Handhabungseinrichtung
- 28: Erfassungsmittel
- 29: Parallelogrammarm
- 30: Drehachse
- 31: Drehachse
- 32: Schwenkarm
- 33: Drehantrieb
- 34: Deckenebene
- 35: Gestell
- 36: Anschlag
- 37: Linearantrieb

## Patentansprüche

1. Verfahren zum Herstellen von geprägten Kennzeichen, insbesondere Kraftfahrzeugkennzeichen (10), wobei Prägewerkzeuge (13) mit Ziffern entsprechend dem zu prägenden Kennzeichen individuell zusammengestellt werden, indem von einer Handhabungseinrichtung (27) die für das jeweils zu prägende Kennzeichen benötigten Prägewerkzeuge (13) in der vorgesehenen Reihenfolge aus einem Magazin (12) entnommen werden, den Prägewerkzeugen (13) ein Rohling (11) des Kennzeichens zugeordnet wird und in mindestens einer Prägeeinrichtung von den Prägewerkzeugen (13) die Ziffern in das Kennzeichen geprägt werden, **dadurch gekennzeichnet, dass** von der Handhabungseinrichtung (27) mit mindestens einem im dreidimensionalen Raum bewegbaren Erfassungsmittel (28) die benötigten Prägewerkzeuge (13) aus dem Magazin (12) herausgesucht und entnommenen werden, dann von der Handhabungseinrichtung (27) die Prägewerkzeuge (13) in der richtigen Reihenfolge der mindestens einen Werkzeugaufnahme (25) zugeordnet und auf dieser positioniert werden, und von der Handhabungseinrichtung (27) ein jeweiliger Rohling (11) aus mindestens einem Speicher (20) mit einer Vielzahl vorzugsweise übereinanderliegender Rohlinge (11) in Gestalt von Zuschnitten entnommen sowie neben der Werkzeugaufnahme (25) positioniert wird.

2. Verfahren nach Anspruch 1, **dadurch gekennzeichnet, dass** von der Handhabungseinrichtung (27) die Prägewerkzeuge (13) in der gewünschten Relativlage zum Rohling (11) ausgerichtet werden, vorzugsweise in einer rechnerisch ermittelten Relativlage zum Rohling (11).

3. Verfahren nach Anspruch 1 oder 2, **dadurch gekennzeichnet, dass** von der Handhabungseinrichtung (27) der jeweilige Rohling (11) auf jeweils einer benachbart zur Werkzeugaufnahme (25) angeordneten Rohlingaufnahme (26) positioniert wird.

4. Verfahren nach einem der vorhergehenden Ansprüche, **dadurch gekennzeichnet, dass** von einer Transporteinrichtung der jeweilige Rohling (11) in die Prägewerkzeuge (13) eingeschoben wird.

5. Verfahren nach einem der vorhergehenden Ansprüche, **dadurch gekennzeichnet, dass** der jeweilige Rohling (11) vor dem Einschieben in die Prägewerkzeuge (13) auf der betreffenden Werkzeugaufnahme (25) relativ zu den Prägewerkzeugen (13) positioniert wird, vorzugsweise von der Handhabungseinrichtung (27) und/oder der Transporteinrichtung.

6. Verfahren nach Anspruch 4 oder 5, **dadurch gekennzeichnet, dass** von der Transporteinrichtung die ihr zugeordnete Werkzeugaufnahme (25) mit den sich darauf befindlichen Prägewerkzeugen (13) und dem in die Prägewerkzeuge (13) auf der betreffenden Werkzeugaufnahme (25) eingesetzten Rohling (11) in die Prägeeinrichtung hinein transportiert und nach dem Prägen heraustransportiert wird.

7. Vorrichtung zum Herstellen von geprägten Kennzeichen, insbesondere Kraftfahrzeugkennzeichen, mit wenigstens einem Magazin (12) für einen Vorrat an Prägewerkzeugen (13), wenigstens einem Speicher (20) für Rohlinge (11) des herzustellenden Kennzeichens und wenigstens eine Prägepresse (23) mit jeweils einer ihr zugeordneten Werkzeugaufnahme (25), **gekennzeichnet durch** eine nach Art eines Roboters ausgebildeten Handhabungseinrichtung (27), die mindestens dazu dient, zum Prägen eines jeweiligen Kennzeichens benötigten Prägewerkzeuge (13) auf der hierfür vorgesehenen Werkzeugaufnahme (25) zu platzieren, indem die Handhabungseinrichtung (27) mindestens ein mehrachsig im dreidimensionalen Raum bewegbares Erfassungsmittel (28) aufweist, wobei durch bewegliche Arme der Handhabungseinrichtung (27) das Erfassungsmittel (28) im dreidimensionalen Raum beweglich ist.

8. Vorrichtung nach Anspruch 7, **dadurch gekennzeichnet, dass** die Handhabungseinrichtung (27) nach Art eines Delta-Roboters ausgebildet ist.

9. Vorrichtung nach Anspruch 7 oder 8, **dadurch gekennzeichnet, dass** die Handhabungseinrichtung (27) mehrere über jeweils eine Rotationsachse bewegbare Arme mit einer räumlichen Parallelogrammführung aufweist, wobei die Arme gelenkig am Erfassungsmittel (28) angreifen.

10. Vorrichtung nach Anspruch 9, **dadurch gekennzeichnet, dass** durch die beweglichen Arme das Erfassungsmittel (28) unter Beibehaltung der Ausrichtung seiner Längsmittelachse im dreidimensionalen Raum beweglich ist.

11. Vorrichtung nach einem der Ansprüche 7 bis 10, **dadurch gekennzeichnet, dass** neben der jeweiligen Werkzeugaufnahme (25) eine Rohlingaufnahme (26) für jeweils einen Rohling (11) vorgesehen ist, die derart der Handhabungseinrichtung (27) zugeordnet ist, dass jeweils ein Rohling (11) von der Handhabungseinrichtung (27) auf der betreffenden Rohlingaufnahme (26) in der vorgesehenen Relativposition zu den Prägewerkzeugen (13) auf der Rohlingaufnahme (26) zugeordneten Werkzeugaufnahmen (25) ablegbar ist.

12. Vorrichtung nach einem der Ansprüche 7 bis 11, **dadurch gekennzeichnet, dass** die jeweilige Rohlingaufnahme (26) mindestens einen Anschlag (36) zur Positionierung des jeweiligen Rohlings (11) auf der Rohlingaufnahme (26) aufweist.

13. Vorrichtung nach einem der Ansprüche 7 bis 12, **dadurch gekennzeichnet, dass** die jeweilige Rohlingaufnahme (26) zur Verschiebung des darauf liegenden Rohlings (11) in seiner Längsrichtung gegenüber der dem betreffenden Rohling (11) zugeordneten Werkzeugaufnahme (25) mit den Prägewerkzeugen (13) ausgebildet ist.

## Claims

1. A method for producing embossed identification plates, in particular motor vehicle license plates (10), wherein embossing tools (13) are assembled individually with characters corresponding to the identification plate to be embossed in that the embossing tools (13) that are required for the identification plate in each case to be embossed are removed from a magazine (12) by a handling device (27) in the sequence provided, a blank (11) of the identification plate is assigned to the embossing tools (13) and the characters are embossed into the identification plate by the embossing tools (13) in at least one embossing device, **characterized in that** the required embossing tools (13) are picked out and removed from the magazine (12) by the handling device (27) with at least one grasping means (28) that is movable in three-dimensional space, then the embossing tools (13) are assigned by the handling device (27) in the correct sequence to the at least one tool holder (25) and positioned on the latter, and a respective blank (11) is removed by the handling device (27) from at least one store (20), which has a large number of blanks that are preferably located one above another in the form of pre-cut parts, and positioned alongside the tool holder (26).

2. The method as claimed in claim 1, **characterized in that** the embossing tools (13) are oriented in the desired relative position with respect to the blank (11), preferably in a computationally determined relative position with respect to the blank (11), by the handling device (27).

3. The method as claimed in claim 1 or 2, **characterized in that** the respective blank (11) is positioned in each case on one blank holder (26) arranged adjacently to the tool holder (25), by the handling device (27),

4. The method as claimed in one of the preceding claims, **characterized in that** the respective blank (11) is introduced into the embossing tool (13) by a transporting device.

5. The method as claimed in one of the preceding claims, **characterized in that,** before being introduced into the embossing tool (13), the respective blank (11) is positioned on the relevant tool holder (25) in relation to the embossing tools (13), preferably by the handling device (27) and/or the transporting device.

6. The method as claimed in claim 4 or 5, **characterized in that** the tool holder (25) assigned to the transporting device, with the embossing tools (13) located on said tool holder (25) and the blank (11) inserted into the embossing tools (13) on the relevant tool holder (25), is transported into the embossing device and after embossing transported out again by the transporting device.

7. An apparatus for producing embossed identification plates, in particular motor vehicle license plates, having at least one magazine (12) for a stock of embossing tools (13), at least one store (20) for blanks (11) of the identification plate to be produced, and at least one embossing press (23) having in each case one tool holder (25) assigned thereto, **characterized by** a handling device (27), configured in the manner of a robot, which serves at least to place embossing tools (13), which are required for embossing each identification plate, on the tool holder (25) provided therefor, in that the handling device (27) has at least one multiaxially movable grasping means (28) that is movable in three-dimensional space, wherein the grasping means (28) can be moved in three-dimensional space by moveable arms of the handling device (27).

8. The apparatus as claimed in claim 7, **characterized in that** the handling device (27) is configured in the manner of a delta robot.

9. The apparatus as claimed in claim 7 or 8, **characterized in that** the handling device (27) has a plurality of arms that are movable about in each case one rotation axis and have a spatial parallelogram linkage, wherein the arms act in an articulated manner on the grasping means (28).

10. The apparatus as claimed in claim 9, **characterized in that** the grasping means (28) is movable in three-dimensional space by the movable arms, while retaining the orientation of its longitudinal centre axis.

11. The apparatus as claimed in one of claims 7 to 10, **characterized in that** a blank holder (26) for in each case one blank (11) is provided next to each tool holder (25), said blank holder (26) being assigned to the handling device (27) such that in each case one blank (11) can be deposited by the handling device (27) on the relevant blank holder (26) in the intended relative position with respect to the embossing tools (13) on tool holders (25) assigned to the blank holder (26).

12. The apparatus as claimed in one of claims 7 to 11, **characterized in that** the respective blank holder (26) has at least one stop (36) for positioning the respective blank (11) on the blank holder (26).

13. The apparatus as claimed in one of claims 7 to 12, **characterized in that** the respective blank holder (26) is configured to displace the blank (11) located thereon in its longitudinal direction with respect to the tool holder (25) which is assigned to the relevant blank (11) and has the embossing tools (13).

## Revendications

1. Procédé de fabrication de plaques d'identification estampées, en particulier de plaques d'immatriculation de véhicules (10), dans lequel des outils d'estampage (13) dotés de chiffres qui correspondent à la plaque d'identification particulière à estamper sont rassemblés, en prélevant selon la succession prévue dans un magasin (12) à l'aide d'un dispositif de manipulation (27) les outils d'estampage (13) nécessaires pour chaque plaque d'identification à estamper, une ébauche (11) de la plaque d'identification étant associée aux outils d'estampage (13) et les chiffres étant estampés dans la plaque d'identification par les outils d'estampage (13) dans au moins un dispositif d'estampage,
**caractérisé en ce que**
les outils d'estampage (13) nécessaires sont cherchés et prélevés dans le magasin (12) par le dispositif de manipulation (27) à l'aide d'au moins un moyen de saisie (28) apte à être déplacé dans les trois dimensions de l'espace,
**en ce que** les outils d'estampage (13) sont alors associés par le dispositif de manipulation (27) dans la succession correcte du ou des logements d'outil (25) et sont placés sur ces derniers et
**en ce qu'**une ébauche (11) est prélevée par le dispositif de manipulation (27) dans au moins une réserve (20) qui présente plusieurs ébauches (11) de préférence superposées, qui ont la forme de flans, et est positionnée à côté du logement d'outil (25).

2. Procédé selon la revendication 1, **caractérisé en ce que** les outils d'estampage (13) sont alignés dans la position relative souhaitée par rapport à l'ébauche (11) par le dispositif de manipulation (27), de préférence dans une position par rapport à l'ébauche (11) déterminée par un calculateur.

3. Procédé selon les revendications 1 ou 2, **caractérisé en ce que** chaque ébauche (11) est placée sur un logement d'ébauche (26) disposé au voisinage du logement d'outil (25) par le dispositif de manipulation (27) .

4. Procédé selon l'une des revendications précédentes, **caractérisé en ce que** chaque ébauche (11) est insérée dans les outils d'estampage (13) par un dispositif de transport.

5. Procédé selon l'une des revendications précédentes, **caractérisé en ce qu'**avant l'insertion dans les outils d'estampage (13), chaque ébauche (11) est placée sur le logement d'outil (25) concerné par rapport aux outils d'estampage (13), de préférence par le dispositif de manipulation (27) et/ou par le dispositif de transport.

6. Procédé selon les revendications 4 ou 5, **caractérisé en ce que** le dispositif de transport transporte le logement d'outil (25) qui lui est associé et sur lequel sont placés les outils d'estampage (13) et l'ébauche (11) insérée sur le logement d'outil (25) concerné dans les outils d'estampage (13) dans le dispositif d'estampage et est extrait après l'estampage.

7. Ensemble de fabrication de plaques d'identification estampées, en particulier de plaques d'immatriculation de véhicules, qui présente un magasin (12) contenant une réserve d'outils d'estampage (13), au moins une réserve (20) d'ébauches (11) de la plaques d'identification à fabriquer et au moins une presse d'estampage (23) à laquelle est associé un logement d'outil (25),
**caractérisé par** un dispositif de manipulation (27) configuré en robot et qui sert au moins à placer sur un logement d'outil (25) prévu dans ce but des outils d'estampage (13) nécessaires pour estamper chaque plaque d'identification, par le fait que le dispositif de manipulation (27) présente au moins un moyen de saisie (28) apte à être déplacé dans les trois dimensions de l'espace, le moyen de saisie (28) étant déplacé dans les trois dimensions de l'espace par des bras mobiles du dispositif de manipulation (27).

8. Ensemble selon la revendication 7, **caractérisé en ce que** le dispositif de manipulation (27) est configuré en robot Delta.

9. Ensemble selon les revendications 7 ou 8, **caractérisé en ce que** le dispositif de manipulation (27) présente plusieurs bras aptes à être déplacés autour d'un axe de rotation respectif et présentant un guide spatial en parallélogramme, les bras engageant le moyen de saisie (28) de manière articulée.

10. Ensemble selon la revendication 9, **caractérisé en ce que** le moyen de saisie (28) peut être déplacé dans les trois dimensions de l'espace par les bras mobiles en maintenant l'orientation de son axe longitudinal central.

11. Ensemble selon l'une des revendications 7 à 10, **caractérisé en ce qu'**en plus du logement d'outil (25), un logement d'ébauche (26) est prévu pour chaque ébauche (11) et est associé au dispositif de manipulation (27) de telle sorte qu'une ébauche (11) peut être déposée par le dispositif de manipulation (27) sur le logement d'ébauche (26) concerné dans la position relative prévue par rapport aux outils d'estampage (13) sur les logement d'outil (25) associés au logement d'ébauche (26).

12. Ensemble selon l'une des revendications 7 à 11, **caractérisé en ce que** chaque logement d'ébauche (26) présente au moins une butée (36) permettant de positionner chaque ébauche (11) sur le logement d'ébauche (26).

13. Ensemble selon l'une des revendications 7 à 12, **caractérisé en ce que** chaque logement d'ébauche (26) est configuré pour déplacer l'ébauche (11) placée sur lui dans le sens de sa longueur par rapport au (25) associé à l'ébauche (11) concernée et présentant les outils d'estampage (13).
